Europäisches Patentamt

European Patent Office

Office européen des brevets

(11) Veröffentlichungsnummer: **0 307 833**
**A2**

## (12) EUROPÄISCHE PATENTANMELDUNG

(21) Anmeldenummer: 88114848.0

(22) Anmeldetag: 10.09.88

(51) Int. Cl.⁴: **B65D 77/04**

(30) Priorität: 17.09.87 DE 3731277

(43) Veröffentlichungstag der Anmeldung:
22.03.89 Patentblatt 89/12

(84) Benannte Vertragsstaaten:
**AT BE CH FR GB IT LI NL SE**

(71) Anmelder: **LUDWIG SCHOKOLADE GMBH
Süsterfeldstrasse 190
D-5100 Aachen(DE)**

(72) Erfinder: **Hünninghaus, Werner, Dipl.-Ing.
Frankfurter Strasse 254
D-5000 Köln 90(DE)**

(74) Vertreter: **Patentanwälte Dipl.-Ing. R.
Splanemann Dr. B. Reitzner Dipl.-Ing. K.
Baronetzky
Tal 13
D-8000 München 2(DE)**

(54) Packung für Nahrungsmittel, sowie Verfahren zur Herstellung derselben.

(57) Eine Packung (10) für Nahrungsmittel wie Schokoladen- oder Süßwaren-Einzelstücke weist eine Innenpackung (14) mit einer Verschlußfolie (16) auf, die einen Warenträger (18) verschließt. Eine die Innenpackung (14) umgebende Außenpackung (12) besteht aus versteifendem Material und weist einen Flansch (22) auf, der sich parallel zu der Verschluß-folie (16) erstreckt, so daß sich mindestens der Rand der Warenträgers (18) und der Verschlußfolie (16) unter dem Flansch (22) erstreckt. Hierbei ist eine Verbindungsnaht (26) zwischen der Verschlußfolie (16) und dem Warenträger (18) im Abstand von der Außenkante des Randes (36) des Warenträgers (18) angeordnet.

EP 0 307 833 A2

Fig. 2

## Packung für Nahrungsmittel, sowie Verfahren zur Herstellung derselben

Die Erfindung betrifft eine Packung für Nahrungsmittel gemäß dem Oberbegriff von Anspruch 1 bzw. 13, sowie ein Verfahren zur Herstellung der Packung nach dem Oberbegriff von Anspruch 19.

Es ist bekannt, bei einer Packung, die aus einer Außenpackung aus steifem Material, wie Karton, Pappe od.dgl., besteht, eine Innenpackung vorzusehen, die vollständig von der Außenpackung umschlossen ist. Diese Packung weist den Vorteil auf, daß die Innenpackung luftdicht versiegelt werden kann, was zur Aufrechterhaltung der Frische und des Aromas der verpackten Waren erforderlich ist. Zur Optimierung des Werkstoffeinsatzes ist man daher dazu übergegangen, die Außenpackung aus ziemlich steifem Material und die Innenpackung aus einem weichen, zähelastischem Material, wie Folie, herzustellen, so daß die Innenpackung eine äußerst geringe Dampfdurchlässigkeit aufweist.

Dabei wird die Innenpackung so ausgebildet, daß ein Warenträger vorgesehen ist, der oben mit einer Folie verschlossen ist, wobei sowohl Heißsiegeln als auch Verkleben der Folie auf dem Warenträger zur Anwendung gelangt.

Bei dieser Art der Innenpackung ergeben sich jedoch Schwierigkeiten, wenn die Folie schnell abgezogen werden soll, um rasch an die Waren zu gelangen. Zum einen muß auch im Bereich der Verbundstelle eine aromadichte Versiegelung erzielt sein, da ansonsten das einzusiegelnde Aroma hier entweichen würde. Zum anderen muß diese Verbindungsstelle langzeitstabilisiert sein, da die Lagerungsdauer der aufzubewahrenden Waren gegebenenfalls Monate betragen kann.

Drittens muß auch die Verbindungsstelle mechanischen Beanspruchungen gewachsen sein. Es hat sich nämlich gezeigt, daß bei der üblichen eher unsanften Behandlung von Pralinenpackungen u.dgl. die Verbindungsnaht trotz Verwendung einer Außenpackung aufplatzen kann, wenn die Innenpackung unten in der Außenpackung festgeklebt ist und die Außenpackung stark verformt wird, so daß die Waren auf die Folie drücken.

Aus diesem Grund ist eine Packung mit Innenpackung und Außenpackung bekannt, wobei die Innenpackung eine heißgesiegelte Folie aufweist.

Um eine sichere Befestigung der Folie auf dem Warenträger zu ermöglichen, ist der für die Heißsiegelung vorgesehene Rand des Warenträgers mehrere Millimeter breit.

Demgegenüber ist es Aufgabe der Erdindung, eine Packung zu schaffen, bei welchen eine preisgünstige und einfache Herstellung möglich ist, wobei dennoch die Packung aromadicht langzeitversiegelt ist und sich die Packung leicht und auch ästhetisch ansprechend aufreißen läßt.

Diese Aufgabe wird erfindungsgemäß durch Anspruch 1 gelöst. Vorteilhafte Weiterbildungen ergeben sich aus den weiteren Ansprüchen.

Durch die Ausbildung des Flansches parallel zu der Verschlußfolie und oberhalb dieser kann sich die Innenpackung gerade mit ihrer Verbindungsnaht an der Außenpackung abstützen. Dadurch wird, gerade dann, wenn die Ware beim Transport auf die Verschlußfolie drückt, ein verstärkter Gegendruck der Außenpackung auf die Verbindungsnaht ausgeübt, so daß die Aufreißgefahr vermindert ist. Bereits hierdurch bedingt kann die Verbindungsnaht vergleichsweise schwach ausgebildet sein. Überraschend ist somit die Stoßsicherheit der Packung größer als bei vollflächiger Ausbildung der Außenpackung.

Die Verschlußfolie kann zudem optisch ansprechend ausgestaltet sein, wobei sich der Packungsspiegel dem Betrachter darbietet.

Durch die Verlegung der Verbindungsnaht zwischen der Verschlußfolie und dem Warenträger nach innen werden mehrere Vorteile erreicht. Zum einen ist die Bruchlast der Verbindungsnaht bei Stauchung und Verwindung der Packung erhöht. Die Scherbeanspruchung der Verbindungsnaht bei Beschädigung der Außenpackung ist geringer, da die eingeleitete Kraft durch den sich nach außen erstreckenden verbindungsnahtfreien Rand des Warenträgers besser verteilt wird.

Ferner läßt sich die Verschlußfolie zum Öffnen der Packung leicht und rückstandsfrei, also ohne daß Folienfetzen hängenbleiben, abziehen. Die Verschlußfolie wird durch ihren verbindungsfreien Rand stabilisiert, so daß sie von vornherein weniger zum Zerreißen neigt. Ferner wird die Zugrichtung so umgelenkt, daß auch beim schnellen Aufreißen der Packung der größte Teil der aufgewendeten Aufreißkraft als Zugkraft in die Verbindungsnaht, nicht aber in die Verschlußfolie als Scherkraft eingeleitet wird. Dies wird dadurch erreicht, daß durch den sich oberhalb der Verbindungsnaht erstreckenden Rand der Außenpackung die Verschlußfolienkräfte beim Aufreißen umgelenkt werden und die Verschlußfolie sich mit dem aufgerissenen und umgeklappten Teil an der Innenfläche des Randes der Außenpackung abstützt.

Darüber hinaus wirkt der freie aufliegende Rand der Verschlußfolie auch als federnde Abstützung zwischen dem Rand des Warenträgers und dem Flansch der Außenpackung.

Besonders günstig für erfindungsgemäß zu erzielende Wirkung ist es, wenn die Verbindungsnaht innerhalb des freien Randes des Flansches der Außenpackung angeordnet ist, da dann ziemlich viel Folienmaterial außerhalb der Naht zur Verfügung steht.

Die Verschlußfolie kann außerhalb der Verbindungsnaht an einem Rand der Packung zumindest teilweise umgeschlagen sein, wobei es besonders günstig ist, wenn ein Stück umgeschlagener Folie als Aufreißlasche verwendet wird. Diese kann in verschlossenem Zustand von dem Flansch teilweise überdeckt sein, jedoch so, daß eine ausreichende Grifflänge zur Verfügung steht. Um das Anfassen zu erleichtern und das Reißen der Verschlußfolie bereits im Laschenbereich zu verhindern, hat die Lasche im Bereich der Verbindungsnaht die Breite der Verschlußfolie und läuft zu ihrem freien Ende hin konisch aus.

Besonders günstig ist es, wenn zur Erzielung einer einerseits aromadichten, andererseits leicht aufreißbaren Packung eine heißsiegelfähige Folie für den Warenträger verwendet wird. Diese - von der Verschlußfolie zu unterscheidende - Folie ist vorteilhaft als Verbundfolie ausgebildet, die erfindungsgemäß tiefgezogen ist. Überraschend lassen sich mit dem erfindungsgemäßen Verfahren Warenträger im Tiefziehverfahren in einer solchen Tiefe herstellen, daß sie für sogar für Waren,, wie Schokoladen- oder Süßwaren-Einzelstücke, Pralinen od.dgl. ausreicht. Eine Ziehtiefe von 18 mm läßt sich erreichen. Hierzu ist eine Verbundfolie mit Aluminiumkern beidseitig kunststoffkaschiert bzw. lackiert.

Günstig ist die Verwendung einer heißsiegelfähigen Kunststofffolie, wie Hart-PVC, als obere innere Schicht des Warenträgers.

Bei Verwendung einer Verbundfolie gemäß Anspruch 7 ist die Polyamidschicht zweckmäßigerweise dünner als die Aluminiumschicht und die Aluminiumschicht dünner als die PVC-Schicht ausgebildet.

Günstigerweise ist die erfindungsgemäße Randausbildung an zwei gegenüberliegenden Seiten, insbesondere an den Längsseiten, der Packung vorgesehen, und eine der beiden größten Flächen der quaderförmig, prismatisch, ganz- oder halbzylindrisch ausgebildeten Packungsgrundform ist von der Verschlußfolie abgedeckt. Eine Aufreißhandhabe ist einstückig mit der Verschlußfolie, insbesondere in Form einer die Verschlußfolie verlängernden Lasche, an einer Schmalseite der Packung ausgebildet.

Die Verbindungsnaht kann aus einer gasdichten Klebe- oder Schweißnaht bestehen. Ferner weist der Warenträger mindestens eine Sortiereinlage für Pralinen auf, wobei ggf. ein Steg vorgesehen ist, der den Warenträger unterteilt, wobei der Steg oben erheblich schmaler als der umlaufende Rand des Warenträgers ist.

Hierbei sind am besten die Endbereiche der Stege in Radien auslaufend ausgebildet, die vom Steg aus gesehen divergieren, so daß durch einen Steg zwei schalenförmige Vertiefungen gebildet sind und im Übergangsbereich Steg-Radius der tiefgezogenen Wand sich in Ziehrichtung erstreckende Falten ausgebildet sind.

Das Tiefziehen kann vorteilhafterweise mit einem an sich bekannten Tiefziehwerkzeug erfolgen, wobei Stellen relativ geringer Ziehbeanspruchung der Folie voreilen und insbesondere mit Distanzscheiben beaufschlagt sind, die den Niederhalterdruck an Stellen großer Biege-Belastung vermindern.

Zweckmäßigerweise wird vor dem Tiefziehen ein Gleitmittel, insbesondere Isopropanol, auf die obere Schicht aufgebracht.

Gemäß einer vorteilhaften Ausgestaltung wird die Größe der Radien in den Seitenwänden des Warenträgers ermittelt, indem bei einer vorgegebenen Verbundfolie die Radien vermindert und/oder die Seitenwandhöhe vergrößert wird, bis sich an den Radien Längsfalten in Tiefziehrichtung einstellen.

Weitere Einzelheiten, Merkmale und Vorteile mehrerer Ausführungsformen der Erfindung sind in der nachfolgenden Beschreibung näher erläutert. Es zeigen:

Fig.1 eine perspektivische Ansicht einer Ausführungsform der erfindungsgemäßen Packung, wobei die Außenpackung mit aufgeklapptem Deckel dargestellt ist;

Fig.2 die Packung gemäß Fig. 1 im Querschnitt ohne Deckel,

Fig.3 eine schematische Seitenansicht einer weiteren Ausführungsform eines erfindungsgemäßen Warenträgers; und

Fig.4 eine Draufsicht auf die Ausführungsform des Warenträgers gemäß Fig.3.

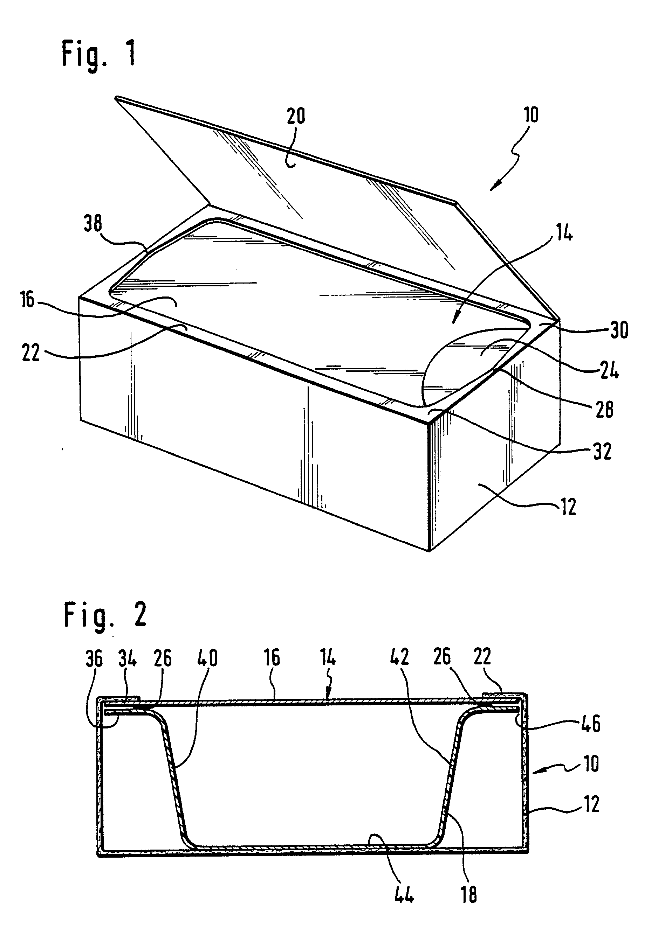

Die Packung 10 gemäß Fig. 1 weist eine Außenpackung 12 und eine Innenpackung 14 auf. Die Außenpackung besteht aus Pappe, Karton oder einem ähnlich steifen Material. Die Innenpackung besteht aus einer Verschlußfolie 16 und einem Warenträger 18, wie es aus Fig. 2 ersichtlich ist. Der Warenträger 18 ist ebenfalls aus einer Folie aufgebaut, wie es weiter unten näher erläutert ist.

In dem Ausführungsbeispiel gemäß Fig. 1 weist die Außenpackung 12 einen Klappdeckel 20 auf, der in an sich bekannter Weise an einer oberen Längskante mittels Ausbildung eines Scharnierfalzes angelenkt und einstückig an die Außenpackung 12 angeformt ist.

Die Außenpackung 12 wird bei der Herstellung aus einem Packungszuschnitt aufgerichtet. Die fertige Innenpackung 14 wird über nicht dargestellte Schwenkwände - entweder an der Bodenseite oder an den Stirnseiten der Außenpackung - eingebracht, wobei der Verschluß mittels der bekannten Steck-Laschen erfolgt, so daß die Außenpackung 12 einen einer Pappschachtel entsprechenden in ihrem quaderförmigen Aufbau aufweist.

Erfindungsgemäß ist an der Oberseite der Außenpackung 12 ein Flansch 22 vorgesehen, der sich mindestens entlang der oberen Längskanten der Außenpackung 12 erstreckt und in der dargestellten Ausführungsform umlaufend ausgebildet ist. Der Flansch 22 weist entlang der Längskanten eine konstante Breite von beispielsweise etwa einem Zehntel der Packungsbreite auf. Entlang der oberen stirnseitigen Kanten der Außenpackung 12 ist der Flansch 22 zur Figurenachse hin verjüngt.

Die Verschlußfolie 16 weist als Aufreißhandhabe eine umgeklappte Lasche 24 auf, die zum Aufreißen der Packung bzw. zum Abziehen der Verschlußfolie 16 von dem Warenträger 18 dient. Die Lasche 24 verjüngt sich zur Packungsmitte hin und liegt flach auf der Verschlußfolie 16 auf.

Beim Aufreißen der Packung 10 wird nun die Lasche 24 schräg nach oben-links in der Darstellung gemäß Fig. 1 gezogen. Das Aufreißen einer in Fig. 2 dargestellten Verbindungsnaht 26 zwischen dem Warenträger 18 und der Verschlußfolie 16 beginnt an der Schmalstelle 28 des Flansches 22 etwa in der Mitte der oberen stirnseitigen Kante des Warenträgers 18. Die von der Schmalstelle 28 ausgehend allmählich zunehmende Breite des Flansches 22 erlaubt einen stufenlosen Übergang der Festigkeit, die die Verbindungsnaht 26 aufgrund des Kraftangriffswinkels dem Öffnen entgegengestzt, und zwar bis in die Eckbereiche 30 und 32 hinein. In den Eckbereichen 30 und 32 ist der Flansch 22 mit einem kleinen Radius abgerundet, so daß die Abnahme der Festigkeit nicht abrupt erfolgt.

Da beim Abziehen der Verschlußfolie 16 von dem Warenträger 18 entlang der Längsseiten die Verbindungsnaht 26 durch eine Kombination von Scherkräften und Transversalkräften beaufschlagt wird, ist ein sanftes Aufziehen möglich. Überraschend ist die Beaufschlagung der Verbindungsnaht 26 mit Scherkräften beim Aufreißen der Packung geeignet, die Gefahr von Rissen in der Verschlußfolie 16 zu vermindern.

Daß die Beaufschlagung mit Scherkräften hier günstig ist, ist auch deswegen überraschend, da Verbindungsnähte Scherkräften in der Regel größere Widerstände entgegensetzen als Transversalkräften in der für das Aufreißen günstigsten Richtung.

Erfindungsgemäß wird die Folie dadurch stabilisiert, daß außerhalb der Verbindungsnaht 26 ein umlaufender freier Folienrand 34 ausgebildet ist, wie es aus Fig. 2 ersichtlich ist.

Der freie Verschlußfolienrand 34 gleitet beim Aufreißen der Packung 10 zwischen einem ebenfalls in Fig. 2 ersichtlichen freien Rand 36 des Warenträgers 18 und dem Flansch 22 einwärts seitlich heraus und bildet so zugleich eine Führung für die nachfolgend aufgerissenen Bereiche der Verschlußfolie. Zudem ist die Verschlußfolie 16 beim Aufreißen der Packung 10 umgeschlagen, so daß der Flansch 22 - auch aufgrund der eingeleiteten Kräfte - etwas hochgedrückt wird und das Herausziehen des Verschlußfolienrandes 34 erleichtert wird.

Der Schmalstelle 28 gegenüberliegend ist - auch aus ästhetischen Gründen - eine weitere Schmalstelle 38 in dem Flansch 22 vorgesehen.

Zudem bietet das Vorsehen der weiteren Schmalstelle 38 die Möglichkeit, die Lasche 24 gewünschtenfalls auch an der Schmalstelle 38 vorzusehen, an welche sie besonders für Rechtshänder geeignet ist.

Wahlweise können auch zwei Laschen je an den Schmalstellen 28 und 38 vorgesehen sein.

Aus Fig. 2 ist die Ausbildung der Innenpackung 14 in allen Einzelheiten ersichtlich. Die Verschlußfolie 16 ist über eine umlaufende Verbindungsnaht 26 mit dem Warenträger 18 abdichtend verbunden. Die Verbindungsnaht ist gemäß einer vorteilhaften Ausgestaltung durch Heißsiegeln hergestellt, wobei der Warenträger 18 aus einer Verschlußfolie besteht, die Heißsiegeln erlaubt. Innerhalb des Warenträgers 18 sind zweistöckig Sortiereinlagen für Pralinen vorgesehen. Der Warenträger 18 weist Seitenwände 40 und 42 auf, die nach unten leicht konisch - etwa im Winkel von 10 Grad - aufeinander zulaufen. Hierdurch wird einerseits die Stabilität der Packung erhöht, andererseits ist die Entnahme erleichtert. Ferner weist der Warenträger 18 allseits abgerundete Ecken, d.h., sowohl in den Eckbereichen 30 und 32, als auch zu seiner Bodenwand 44 hin, auf, um die Verletzungsgefahr für den Benutzer zu vermindern.

Es ist ersichtlich, daß der Folienrand 34 sich zwischen dem Flansch 22 und dem freien Rand 36 des Warenträgers 18 befindet und somit von der Packungsmitte aus gesehen außerhalb der Verbindungsnaht 26 angeordnet ist. Als Verschlußfolie 16 kommt eine beliebige handelsübliche Verbund- oder Aluminiumfolie in Betracht, die das Heißsiegeln an der Verbindungsnaht 26 erlaubt und zudem gut bedruckbar ist.

Besonders günstig als Verschlußfolie 16 ist eine laminierte Kunststoff-Aluminium-Verbundfolie aus einer 30 $\mu$ starken Aluminiumschicht und einer 40 $\mu$ starken Polypropylenschicht, wobei anstelle der Polypropylen- auch eine Polyäthylenschicht eingesetzt werden kann. Diese Folie weist eine sehr hohe Reißfestigkeit in Längsrichtung auf, was für den vorliegenden Anwendungsfall günstig ist, und es ist ohne weiteres möglich, sie zu bedrukken. Eine Färbung der Folie von unten, die angesichts der umgeklappten Aufreißlasche wünschenswert ist, kann durch Pigmentierung der Klebeschicht zwischen der Kunststoff- und der Aluminiumschicht erfolgen. Die Heißsiegelung oder gegebenenfalls die Klebung erfolgt zwischen der Kunststoffschicht und dem Warenträger.

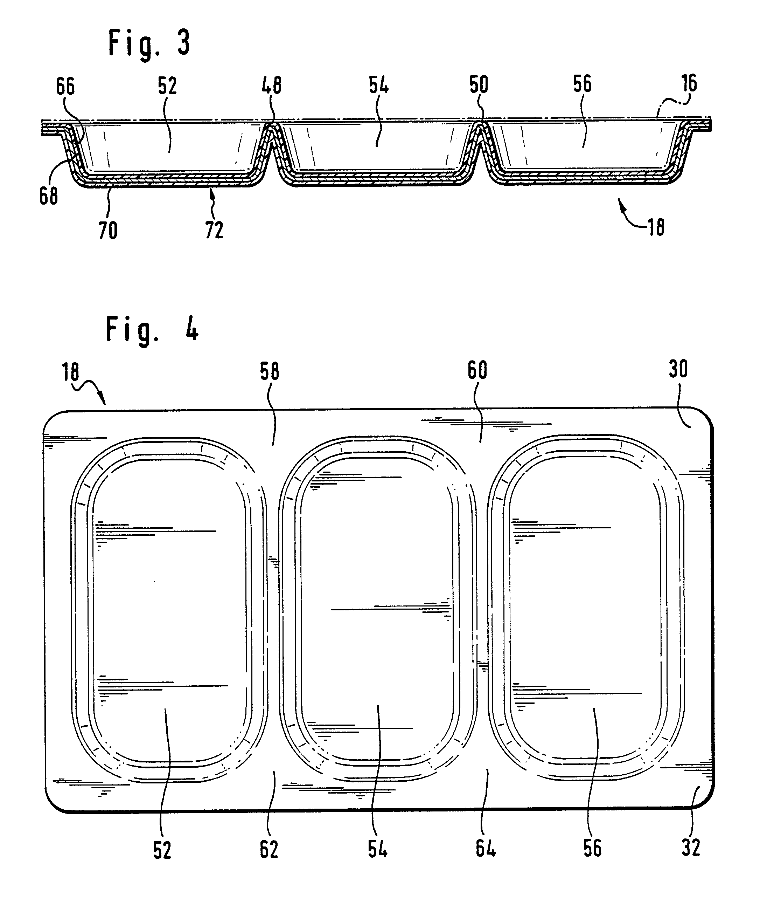

Die weitere Ausgestaltung gemäß Fig. 3 weist einen Warenträger 18 mit zwei Stegen 48 und 50 auf, die sich über die ganze Höhe des Warenträgers erstrecken und in Querrichtung der Packung verlaufen, wie es auch aus Fig. 4 ersichtlich ist.

Durch die Stege 48 und 50 wird die Innenpackung in drei schüsselförmige Einzelbehältnisse 52, 54 und 56 unterteilt, die von einer gemeinsamen Verschlußfolie 16 abgedeckt sind.

Die Verbindungsnaht 26 verläuft auch über die Stege 48 und 50, so daß die Einzelbehältnisse 52, 54 und 56 gegeneinander abgedichtet sind. Auf den Stegen 48 und 50 ist die Verbindungsnaht jedoch beispielsweise nur 1,5 mm breit, während sie umlaufend 4 mm breit ausgebildet ist. Zudem ist durch entsprechende herstellungstechnische Maßnahmen die Haftung der Verbindungsnaht über den Stegen 48 und 50 so weit vermindert, daß ein Reißen der Folie 16 an den Stegen 48 und 50 ausgeschlossen ist.

Diese Maßnahme ist erforderlich, da an den Stegen 48 und 50 beim Öffnen der Innenpackung keine Abstützung an einem Flansch 22 der Außenpackung stattfindet.

Die Ausbildung der Verbindungsnaht auch auf den Stegen 48 und 50 erlaubt es, die Einzelbehältnisse 52, 54 bzw. 56 je separat anzubrechen und die je noch verschlossenen Einzelbehältnisse aromadicht versiegelt zu halten.

In dieser Ausführungsform ist die Steilheit der Seitenwände 42 und 40 etwas geringer als in der Ausführungsform gemäß Fig. 2, so daß der Winkel gegenüber der Senkrechten 15° beträgt. Die Stegwände der Stege 48 und 50 weisen je die gleiche Steilheit auf. Ferner sind die Radien an den Eckbereichen 32 und 30 und an den gegenüberliegenden Eckbereichen vergrößert. Dabei sind die Einzelbehältnisse 52, 534 und 56 je symmetrisch ausgebildet, so daß die gleichen Radien an den Endbereichen 58, 60, 62, 64 der Stege 48 und 50 auftreten, wie es aus Fig. 4 ersichtlich ist.

Erfindungsgemäß ist in diesem Ausführungsbeispiel der Warenträger 18 aus tiefgezogener Verbundfolie aufgebaut. Die erfindungsgemäße Verbundfolie weist einen Aluminiumkern auf, der von Kunststoffschichten umgeben ist, die durch ein übliches Verfahren fest haftend auf der Aluminiumfolie aufgebracht sind.

In dem vorliegenden Ausführungsbeispiel ist folgender Schichtaufbau vorgesehen:

Eine obere Innenschicht 66 besteht aus 60 μ Hart-Polyvinylchlorid. Eine Kernschicht 68 besteht aus 45 μ Aluminium. Eine untere Außenschicht 70 besteht aus 25 μ Polyamid. Überraschend kann diese Verbundfolie in einer für Pralinen ausreichenden Tiefe gezogen werden, nämlich ca. 18 mm, ohne daß ein Brechen auftritt. Die Fließeigenschaften von Polyvinylchlorid tragen dazu bei, die in der Kernschicht 68 auftretenden Spannungen zu kanalisieren und zu vergleichmäßigen, so daß die Verbundfolie 72, die aus dem angegebenen Schichtaufbau besteht, beim Tiefziehen nicht reißt.

Das erfindungsgemäße Verfahren hierzu ist besonders ausgestaltet und wird im folgenden beschrieben.

Es wird ein übliches Tiefziehwerkzeug aus Patrize und Matrize aufgebaut, wobei der Stempel der Patrize von einem Niederhalter umgeben ist, der auf einen Ziehring wirkt. Zwischen Ziehring und Niederhalter wird der Rand 36 der Verbundfolie 72 ausgeformt.

Der Abstand zwischen dem Innendurchmesser des Ziehringes und dem Außendurchmesser des Stempels beträgt hierbei mehr als eine Materialstärke der Verbundfolie, um eine freie Ausbildung der Seitenwände 40 und 42 zu ermöglichen. Erfindungsgemäß ist es vorgesehen, Distanzscheiben zwischen dem Niederhalter und dem Ziehring zu verwenden, die zwischen den freien Rand 36 und den Niederhalter eingebracht sind und eine Stärke von etwa 1 mm aufweisen. Die Distanzscheiben erstrecken sich entlang des gesamten freien Randes 36, also umlaufend um den Warenträge 18.

Die Wirkung der Distanzscheiben liegt darin begründet, daß der Niederhalterdruck verringert wird. Insbesondere im Bereich der Stege 48 und 50 ist so der Materialfluß leichter möglich, so daß ein Tiefziehen in der angegebenen Größenordnung möglich ist.

Erfindungsgemäß ist es hierbei möglich, daß sich kaum wahrnehmbare Längsfalten in Materialflußrichtung an dem Rand 36 ausbilden, während an den Radien der Endbereiche 58, 60, 62 und 64 der Stege 48 bzw. 50 ebenfalls Längsfalten vorgesehen sind. Besonders günstig ist es, wenn dieser Bereich durch vergleichsweise geringen Niederhalterdruck beaufschlagt ist, so daß dort der Materialfluß in der günstigsten Weise erfolgen kann.

Dort entstehende kleine Falten stören nicht den ansprechenden Gsamteindruck der Innenpackung, tragen hingegen zur Stabilisierung bei. Das maximale, für die laufende Produktion mögliche Verhältnis ist erreicht, wenn die Falten maximal so weit umgeknickt sind, wie es der einfachen Materialstärke entspricht.

In einem erfindungsgemäß durchgeführten Versuch wurde als Gleitmittel Isopropanol verwendet, das auf die obere Innenschicht 66 aufgebracht wurde. Durch die vergleichsweise dünne Ausbildung der Kunststoffschichten, die die Kernschicht 68 umgeben, wird der Aluminiumcharakter des Warenträgers 18 nicht beeinträchtigt.

Im Rahmen eines Vergleichsversuchs wurde versucht, die Verbundfolie in umgedrehter Richtung, d.h., mit untenliegender PVC- Schicht, tiefzuziehen. Hierbei zeigte sich jedoch ein Reißen bereits bei einer Ziehtiefe von 12 mm.

## Ansprüche

1. Packung für Nahrungsmittel, insbesondere für solche begrenzter Haltbarkeit wie Schokoladen- oder Süßwaren-Einzelstücke, mit einer Innenpackung, die aus einem mittels einer Folie verschlossenen Warenträger besteht, und mit einer die Innenpackung umgebenden Außenpackung aus einem versteifenden Material, wie Karton, Pappe od. dgl., dadurch **gekennzeichnet,** daß die Außenpackung (12) einen sich parallel zu der Verschlußfolie erstreckenden Flansch (22) aufweist, unter den sich mindestens der Rand des Warenträgers (18) und der Verschlußfolie (16) erstreckt, und eine Verbindungsnaht (26) zwischen Verschlußfolie (16) und Warenträger (18) im Abstand von der Außenkante (46) des Randes (36) des Warenträgers (18) gelegt ist.

2. Packung nach Anspruch 1, dadurch gekennzeichnet, daß die Verschlußfolie (16) auf dem Rand (36) des Warenträgers (18) mit einem Folienrand (34) frei aufliegt.

3. Packung nach Anspruch 1 oder 2, dadurch gekennzeichnet, daß die Verbindungsnaht (26) zwischen Verschlußfolie (16) und Warenträger (18) innerhalb des freien, den Packungsspiegel umschließenden Randes des Flansches (22) der Außenpackung (12) angeordnet ist.

4. Packung nach einem der Ansprüche 1 bis 3, dadurch gekennzeichnet, daß die Aufreißhandhabe (24) nach oben über die Verschlußfolie (16) geschlagen ist und sich teilweise unter dem Rand der Außenpackung (12) erstreckt.

5. Packung nach einem der vorhergehenden Ansprüche, dadurch gekennzeichnet, daß die Verschlußfolie (16) Metall, wie Aluminium, aufweist und insbesondere als Verbundfolie ausgebildet ist und/oder der Warenträger (18) aus Verbundfolie (72) besteht.

6. Packung, insbesondere nach dem Oberbegriff von Anspruch 1, bei der eine Verbundfolie für einen Warenträger verwendet wird, dadurch gekennzeichnet, daß die Verbundfolie (72) eine Aluminiumschicht (68) aufweist und tiefgezogen ist.

7. Packung nach Anspruch 6, dadurch gekennzeichnet, daß die Aluminiumschicht (68) zwei unterschiedlich starke Kunststoffschichten (66, 70) aufweist, wobei die beim Tiefziehen stärker belastete, insbesondere obere Kunststoffschicht (66) aus fließverformbarem Kunststoff, wie Hart-PVC, besteht und die weniger stark belastete, insbesondere untere Schicht (70) aus hartelastischem Kunststoff, wie Polyamid, besteht.

8. Verfahren zur Herstellung einer Packung mit einem Warenträger, der aus Verbundfolie besteht, wobei eine Schicht der Verbundfolie aus Kunststoff besteht, dadurch gekennzeichnet, daß die Verbundfolie zur Ausbildung des Warenträgers tiefgezogen wird.

9. Verfahren nach Anspruch 8, dadurch gekennzeichnet, daß die obere Schicht der aus Kunststoff-Aluminium-Kunststoff bestehenden Verschlußfolie als beim Tiefziehen stärker belastete Schicht aus einem fließfähigen Kunstoff wie PVC ausgebildet wird.

10. Verfahren nach Anspruch 8 oder 9, dadurch gekennzeichnet, daß in dem Warenträger beim Tiefziehen Stege ausgebildet werden, die Seitenwände in einer der Höhe der Packung entsprechenden Höhe aufweisen, wobei die Seitenwände mittels Radien in Seitenwände des Warenträgers auslaufen und wobei seitlich jedes Stegs zwei schalenförmige Behältnisse ausgebildet werden.

**Fig. 1**

**Fig. 2**

Fig. 3

Fig. 4